Europäisches Patentamt

European Patent Office

Office européen des brevets

(19)

(11) Publication number: 0 379 908
A2

# (12) EUROPEAN PATENT APPLICATION

(21) Application number: 90100609.8

(22) Date of filing: 12.01.90

(51) Int. Cl.⁵: B60J 10/02

(30) Priority: 24.01.89 US 301517

(43) Date of publication of application:
01.08.90 Bulletin 90/31

(84) Designated Contracting States:
AT BE CH DE ES FR GB IT LI NL SE

(71) Applicant: ESSEX SPECIALTY PRODUCTS,
INC.
1135 Broad Street
Clifton New Jersey 07015(US)

(72) Inventor: Martin, Brian
290 North Post Road
Princeton Junction New Jersey 08550(US)
Inventor: Holda, Edward Allan
6936 Longwood
Canton Michigan 48187(US)

(74) Representative: Rottmann, Maximilian R.
c/o Rottmann, Zimmermann + Partner AG
Glattalstrasse 37
CH-8052 Zürich(CH)

(54) Foamable hot melt composition and its use in the bonding of a windshield.

(57) In a window pane mounting apparatus, the inboard surface of the window pane is provided with a first peripheral bead of a room temperature curable adhesive and a second peripheral bead, interior of the first bead, of a foamable, elastomeric, hot melt adhesive. When the window pane is disposed in a window opening, the second bead presents a dam against deformation of the first bead interior of the second bead.

EP 0 379 908 A2

## FOAMABLE HOT MELT COMPOSITION AND ITS USE IN THE BONDING OF A WINDSHIELD

The present invention relates generally to a window pane mounting method and apparatus and more particularly is directed to the installation of an automobile windshield using a deformable adhesive.

While many different methods for securing a glass plate within a vehicle body window opening exist, one of the most common is the use of a flexible reveal moulding. In the "Christmas tree" type reveal mouldings, such as the one described in U.S. Patent No. 4,523,783 (Yamada), the window opening is hemmed by a generally continuous peripheral flange and the window pane is disposed in the window opening with its peripheral edge overlapping the opening's peripheral flange. The window pane is bonded to the flange by an adhesive in this overlapping area such that the pane is centered within the window opening. The moulding is placed between the window pane and the window opening so as to resiliently engage both and to provide a continuous smooth surface from the window pane to the outside of the window opening.

The uncured adhesive is applied in a peripheral bead around the peripheral edge of the inboard surface of the window pane. As the window pane is disposed in the window opening with its edge overlapping the flange, the adhesive is squeezed between the window pane and the flange and flows to surround and adhere to the moulding, after which the adhesive is cured. This construction requires a separate sealing member, such as a rubber lip or dam, bonded to the inboard surface of the window pane between the adhesive and the vehicle cabin, i.e. the adhesive is between the lip and the window edge. The lip prevents the non-cured adhesive from flowing into the vehicle cabin during assembly. The requirement of a separate lip, bonded to the inboard surface of the window pane in an initial operation, increases the cost of this type of window pane mounting arrangement. Furthermore, until the adhesive is cured to bind the window pane to the frame, the window pane may slip off-center within the opening, and so the moulding or other means must be used to hold the window pane in position.

Accordingly, it is an object of the present invention to provide a window pane mounting method and apparatus which avoid the above-described difficulties of the prior art.

It is another object of the present invention to provide a window pane mounting method and apparatus which reduce the cost of installation of an automobile windshield, rear window (backlites) or side glass (quarter glass) into a vehicle body window opening.

It is yet another object of the present invention to provide a window pane mounting method and apparatus using a deformable adhesive, which method and apparatus avoid the use of a separately bonded lip for preventing flow of the adhesive into the vehicle cabin.

It is still a further object of the present invention to provide a window pane mounting method and apparatus using a deformable adhesive, which method and apparatus avoid the use of a mechanical structure for maintaining the window pane in the window opening prior to cure of the adhesive.

In accordance with an aspect of the present invention, a window pane mounting arrangement comprises a panel defining a window opening having a peripheral flange and a window pane having a peripheral edge and adapted to be disposed in the window opening with the edge overlapping the flange by a predetermined distance, the pane having outboard and inboard surfaces. A first peripheral bead of a room temperature curable adhesive is located on the inboard surface of the pane within the predetermined distance of the edge, the first bead being deformable prior to cure, and a second peripheral bead of a foamed, elastomeric, hot melt adhesive is located on the inboard surface of the pane interior of the first bead and within the predetermined distance of the edge. The first and second beads are configured such that the second bead presents a dam against deformation of the first bead interior of the second bead as the window pane is disposed in the window opening with the inboard surface confronting the flange.

Advantageously, the second bead has an upper surface which contacts the flange, as the pane is disposed in the window opening, before the deformation of the first bead causes it to flow interior of the second bead. To this end, the first bead advantageously has an upper surface which extends above that of the second bead and the second bead is configured or is spaced interior of the first bead by a distance sufficient to accommodate the first bead upon contact with the flange without deformation of the first bead interior of said second bead.

Advantageously, the foamed hot melt adhesive is tacky when it is applied to the window pane, so that when the window pane contacts the flange, the tacky hot melt adhesive will immediately serve to hold the window pane centered within the window opening until the room temperature curable adhesive is cured.

In accordance with another aspect of the present invention, a method for mounting a window pane in a panel comprises the step of applying a first peripheral bead of a room temperature curable adhesive on an inboard surface of a window pane along a peripheral edge of the pane and within a predetermined distance from the edge, the first bead being deformable prior to cure, and applying a second peripheral bead of a foamed, elastomeric, hot melt adhesive on the inboard surface of the pane along the edge, the second bead being interior of the first bead and within the predetermined distance from the edge. The method further comprises the subsequent steps of disposing the pane in a window opening of a panel with the edge overlapping a peripheral flange of the panel by the predetermined distance and with the inboard surface confronting the flange, and damming the first bead with the second bead against deformation of the first bead interior of the second bead.

These and other objects, aspects and features of the present invention will become apparent from the following detailed description of a preferred embodiment thereof taken in connection with the accompanying drawings, throughout which like reference numerals denote like elements and parts.

Fig. 1 is a partial perspective view of a motor vehicle having a window pane which is mounted by way of a window pane mounting apparatus to thereby close the window opening;

Fig. 2 is a cross sectional view of a window pane mounting apparatus in accordance with the present invention taken at section A in Fig. 1;

Fig. 3 is a schematic representation of a cross sectional view of a window pane bearing first and second peripheral beads of adhesive in accordance with a preferred embodiment of the present invention;

Fig. 4 is a top plane view of the window pane of Fig. 3; and

Fig. 5 is a further cross sectional view of the window pane of Fig. 3 as the window pane is disposed in a window opening.

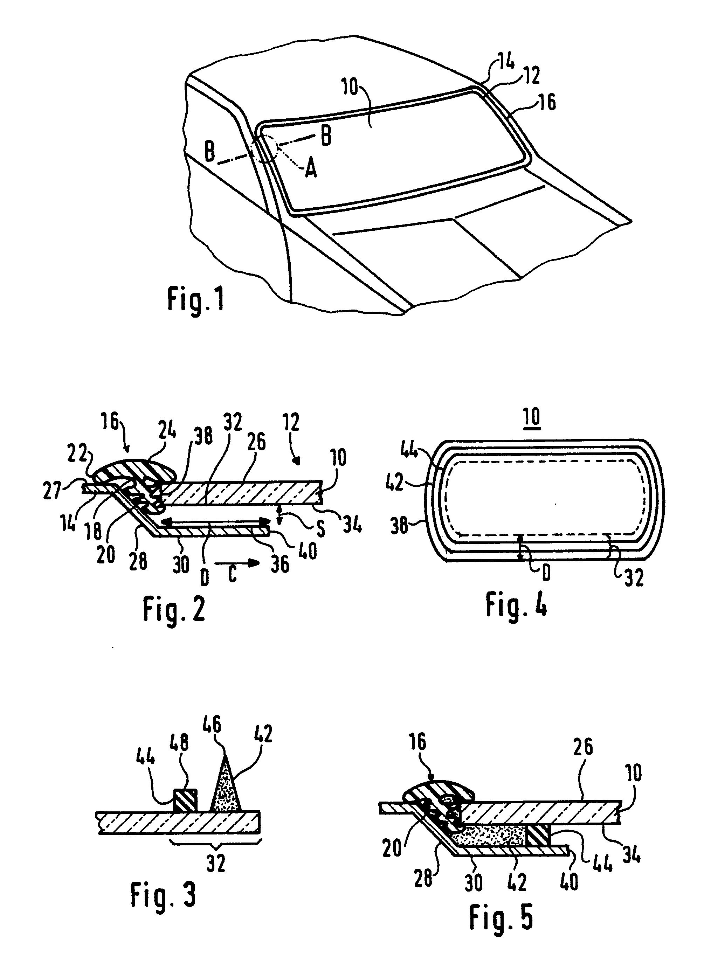

Referring now to the drawings, and initially to Fig. 1 thereof, a window pane 10 is shown fitted into the window opening 12 of a front windshield panel 14 of an automobile vehicle body. A window moulding 16 extends around the entire periphery of window pane 10 to create a smooth and ornamental surface between window pane 10 and panel 14. The present invention is directed towards a method and apparatus for mounting the window pane 10 within window opening 12 using a mounting procedure which is both inexpensive and effective. Although the present invention is described in connection with the mounting of a windshield in a panel of an automobile vehicle body, it will be apparent to those of ordinary skill in the art that the present invention is equally applicable to the mounting of a window pane in a suitable window opening of any panel, regardless of the structure or frame in which that panel is presented.

Furthermore, the present invention will be described for use in connection with a "Christmas tree" type reveal moulding as described in the above-cited patent. The present invention is further useable with other types of reveal mouldings and window pane mounting arrangements which use a deformable, room temperature curable adhesive which is deformed to flow around and adhere to window pane 10, moulding 16 and window opening 14.

The section A in Fig. 1 is shown in cross section in Fig. 2, with the view taken perpendicular to the page along arrows B-B. It will be understood that this same cross sectional configuration appears along the entire periphery of window pane 10. Moulding 16 is formed as an integral extruded member preferably, of flexible, plastic material, such as polyvinyl chloride. Moulding 16 includes a downwardly extending leg member 18 having a plurality of legs 20 extending outwardly therefrom and respectively adapted to contact and grip different portions of window pane 10. Moulding 16 further includes an upper portion 22 having a smoothly curved upper surface 24 adapted to resiliently contact the outboard surface 26 of window pane 10 and the outer surface 28 of window opening 12.

As shown in Fig. 2, panel 14 is bent to form vehicle body window opening 12. Panel 14 defines a rebate having a wall flange 28 and an inwardly directed fence flange 30 extending obliquely from wall flange 28. In other embodiments, the wall flange may extend substantially normal to fence flange 30. When window pane 10 is inserted in window opening 12, its peripheral edge 32 overlaps fence flange 30 by a distance D with a spacing S between the inboard surface 34 of window pane 10 and the inner surface 36 of fence flange 30. Distance D extends from the periphery 38 of window pane 10 to the end 40 of fence flange 30.

Interior of end 40, that is, in the direction of arrow C in Fig. 2, is the vehicle cabin of the automobile itself. This direction of arrow C will be termed the interior direction, so that end 40 is interior of periphery 38.

Prior to inserting window pane 10 in window opening 12, first and second peripheral beads 42, 44 of two different types of adhesive are applied around the peripheral edge 32 of window pane 10 within the overlapping distance D, as shown in Figs. 3 and 4. First peripheral bead 42 is formed of a room temperature curable adhesive, for example a polyurethane polymer composition as disclosed in U.S. Patent No. 3,779,794. This is the standard type of adhesive used with the "Christmas tree" type of reveal moulding described above. It will be understood, of course, that other types of room temperature curable adhesives may be used. First bead 42 extends in a closed curve entirely around the periphery 38 of window pane 10.

The second peripheral bead 44 eliminates the need for the separate rubber lip used in the prior art. Second bead 44 is applied interior of first bead 42 but still within the overlapping distance D around the peripheral edge of window pane 10. Second bead 44 is also applied in a closed curve entirely around periphery 38 and is formed of a foamable, elastomeric, hot melt adhesive.

If the adhesive of first bead 42 is not adversely affected by the heat from the hot melt adhesive of second bead 44, then first and second beads 42, 44 may be applied in either order. If first bead 42 will be adversely affected by heat, then second bead 44 should be applied first and then allowed to cool sufficiently before first bead 42 is applied.

During assembly, as window pane 10 is brought toward fence flange 30, upper surface 46 of first bead 42 will contact inner surface 40 of fence flange 30 before upper surface 48 of second bead 44 does. The first bead 42, being deformable prior to cure, will therefore be squeezed between window pane 10 and fence flange 30 as window pane 10 is lowered towards fence flange 30 and will spread out in the interior and periphery directions. However, first bead 42 is so configured and/or spaced from second bead 44 that by the time the first bead's substance is deformed to reach to second bead 44, upper surface 48 of second bead 44 will contact fence flange 30, thus damming first bead 42 from any flow interior of second bead 44. Instead, the adhesive substance of first bead 42 will fill the space DxS exterior of second bead 44 to flow up to and surround legs 20 of moulding 16.

Thus, second bead 44 forms a pumpable dam which prevents the adhesive of first bead 42 from being expelled inwardly into the vehicle cabin, spaces the glass window pane 10 from fence flange 30 and holds window pane 10 in place upon contact. When second bead 44 is formed of a tacky adhesive, it gives an instant quick fixturing for the glass window pane 10 until it is bonded by first bead 42 cured at room temperature.

The foamable, elastomeric, hot melt adhesive used in the second peripheral bead of the present invention may contain various polymers and tackifiers.

The polymers are chosen for their abilities to improve low temperature resistance, tack, adhesion and bond strength, and to provide toughness and strength to the adhesive. For example, KRATON D1320, a poly (styrene-isoprene-styrene) tri-block copolymer, KRATON G1652, a high molecular weight poly (styrene-co-ethylenebutylene-styrene) tri-block copolymer, KRATON G1726, a low molecular weight poly (styrene-co-ethylenebutylene) di-block copolymer and KRATON G1701, another poly (styrene-co-ethylenebutylene) di-block copolymer, alone or in combination, provide a good balance of moderate melt temperature, low melt viscosity, toughness at room temperature and flexibility at low temperature. (The KRATON polymers are commercially available from Shell Chemical Company.) Each of these polymers may be present in a range of 1 to 15% by weight, preferably from 4 to 10% by weight, of the adhesive.

Commercially available tackfiers include ESCOREZ 5320 (available from Exxon), REGALREZ 1094 (available from Hercules) and SYLVATAC 105NS (available from Sylvachem), for example. ESCOREZ 5300 is a general purpose hydrocarbon tackifier; REGALREZ 1094 is also a hydrocarbon tackifier; and SYLVATAC 105NS is a modified rosin tackifier. Resins which can advantageously be employed include alpha methyl. styrene resins and aromatic hydrocarbon resins. ARKON P90 (commercially available from Arakawa Chemical (USA) Inc.) is believed to be such an alpha methyl styrene resin. ENDEX 160 (commercially available from Hercules) is an aromatic hydrocarbon resin. These are used as end block reinforcing resins for poly (styrene-isoprene-styrene) tri-block copolymers and poly (styrene-co-ethylenebutylene-styrene) tri-block copolymers. Each of the tackifiers and resins may be present in a range of 2 to 60% by weight, preferably 4 to 50% by weight, of the adhesive.

The foamable hot melt adhesive can contain other ingredients which contribute to the thixotropy of the formulation. A silica, for example TS720 (commercially available from Cabot Corp.), AEROSIL products (commercially available from Degussa), for example AEROSIL 300 and AEROSIL 202, and CABOSIL products (commercially available from Cabot Corporation), for example CABOSIL M5, can be used as thixotropes and to increase the viscosity of the melt. In addition a carbon black, for example ELFTEX 8 or VULCAN PF (both commercially available from Cabot Corp.) can be used to improve the thixotropy and also tint the product. Effective amounts of these ingredients are 0.1 to 10% by weight, preferably 0.5 to 6% by weight, of the adhesive.

Plasticizers can be added to improve the tack and bond strength of the hot melt adhesives, to reduce the melt viscosity and to improve the low temperature flexibility of the adhesives. PX338 (commercially available from USS Chemicals), a trimellitate plasticizer, is such a plasticizer. Further, CELLOKYD PL5 (commercially available from Cellomer Corporation) is a particular grade of polymeric alkyd plasticizer. Additionally, a mineral oil, for example TUFFLO 6016 (commercially available from Atlantic Richfield Company), may be used. These may be used in effective amounts such as 10 to 40% by weight, preferably 15 to 30% by weight, of the adhesive.

Additional ingredients may be included in the foamable hot melt adhesives to be used with the invention.

For example, antioxidants may be advantageously included. IRGANOX 1010 (commercially available from Ciba-Geigy) and BUTYL ZIMATE (commercially available from R.T. Vanderbilt Company, Inc.) are typically used. Surfactants are likewise advantageously included. A sodium dioctyl sulfosuccinate such as AEROSOL OT 100 is preferred. The antioxidants and surfactants are employed in effective amounts such as 0.1 to 1% by weight, preferably 0.4 to 0.8% by weight, of the adhesive. LAMBDA C 300-75 (commercially available from Performance Polymers International), a fully reacted urethane, may be used in an effective amount such as from 1 to 8% by weight of the adhesive to reduce the shrinkage of the product on cooling.

Finally, a blowing agent may be added if desired. Particularly useful are azodicarbonamide blowing agents. An example of a suitable azodicarbonamide blowing agent is KEMPORE I25E (commercially available from Olin Chemicals) which may be employed in an effective amount ranging from 0 to 5% by weight of the adhesive.

The blowing agent is added as an optional ingredient because there are two methods to form a suitable foamed hot melt adhesive. One method employs a blowing agent and the other does not.

When a blowing agent is not employed, nitrogen, carbon dioxide or any relatively inert gas is intimately mixed with, or dissolved in, a thermoplastic adhesive while the adhesive is in the liquid state. The liquid/gas mixture is confined under pressure in order to force the gas into solution with the liquid adhesive. The liquid adhesive is dispensed at atmospheric pressure with the result that the gas is released from the solution. The gas becomes entrapped in the adhesive to form a foamed hot melt adhesive.

The preferred method to be used in accordance with the present invention employs a blowing agent. The blowing agent, such as a powdered azodicarbonamide, is mixed into a hot melt adhesive which is in the liquid state at a temperature below the decomposition temperature of the blowing agent. Then, the liquid adhesive containing the blowing agent is heated to a temperature above the decomposition temperature of the blowing agent and is dispensed. Gas generated by the decomposition of the blowing agent is entrapped in the adhesive to form a foamed hot melt adhesive.

Whether or not a blowing agent is employed, the adhesives used in the present invention are applied by conventional means.

An advantageous example of a suitable foamable hot melt adhesive to be used in accordance with the present invention is a compound produced by Essex Specialty Products, Inc., the assignee of the present application, under the registered trademark BETASEAL 430-55. This compound is a foamable hot melt adhesive containing a KEMPORE blowing agent. It is heated to approximately 350°F and applied via conventional hot melt pumping equipment, which causes the compound to expand and increase its volume by approximately 45%. It is particulary adapted to be applied to glass, its use in the present application.

Advantageously, BETASEAL 430-55 foamed hot melt adhesive provides instant fixturing of the windshield panel in the window opening. The tackiness of the compound provides instant fixturing at a value of approximately 20 psi.

In a typical application, the BETASEAL 430-55 compound is heated to 350°F and is applied to the inboard surface of the window pane, where instant foaming results in an expansion of about 45% of its original size. (The decomposition temperature of the KEMPORE blowing agents is, in air, from about 190 to 240°C, and with activators from about 150 to 185°C.) The resulting bead, when cooled to room temperature, is elastomeric and has a tacky surface that gives instant fixturing to an applied surface. Therefore, no separate means is required to hold the window pane in place while the room temperature curable adhesive is cured over the usual period of, for example, 48 hours.

It is a further advantageous feature of the BETASEAL 430-55 compound that it can be extruded in a variety of cross sectional configurations.

This compound also has good elastomeric compressibility properties, providing a good seal against water leaks and wind noise. The maximum water absorption is 0.5 to 2%, preferably less than 1%.

Additionally, BETASEAL 430-55 has a hardness of 15 to 20 "00" Durometer (as measured in accordance with ASTM D 2240 except that samples are single ply and an instantaneous reading is used). The maximun density of the foamed product is approximately 500 kg/m$^3$ and of the unfoamed product is approximately 800 kg/m$^3$.

Other defined characteristics include the paint compatibility, compatibility to glass bonding materials, compression deflection, maximum compression set, storage stability and color. Regarding paint compatibility there is essentially no evidence of migration stain, pinholing, blistering or softening of the paint film. The material is compatible with and adheres to the glass bonding materials: glass primers, body flange primer and urethane adhesive. The instantaneous compression deflection (compressive force to achieve a compression of 25% with a 1" diameter probe) is from about 6 to 10 psi, and the compression deflection after 60 seconds is from about 3 to 6 psi (as measured in accordance with ASTM D1667). The maximum compression set, although it can vary, is preferably about 10% (as measured in accordance with ASTM D 1667 except at 43 ± 1° C for 8 hours).

Preferably, the color is black.

Further objects of this invention, together with additional features contributing thereto and advantages accruing therefrom, will be apparent from the following specific examples of the compositions used in the present invention listed below.

|  | A | B | C | D |
|---|---|---|---|---|
| Kraton D 1320 |  |  |  | 9.5 |
| Kraton G 1652 | 11.5 | 12 | 9.3 | 4.9 |
| Kraton GX 1726 | 11.5 |  | 9.7 | 4.2 |
| Kraton G 1701 MX |  |  | 4.2 | 5.2 |
| Kraton D 1107 |  | 12 |  |  |
| Lambda C300-75 |  |  |  | 3.3 |
| Arkon P90 | 46 |  | 20.9 | 19.4 |
| Regalrez 1094 |  |  | 19.4 |  |
| Endex 160 |  |  | 6 | 5.6 |
| Sylvatac 105NS |  | 48 |  |  |
| Escorez 5320 |  |  |  | 23.1 |
| Tufflo 6056 | 23 | 24 | 11.6 | 6.6 |
| Cellokyd PL5 |  |  | 11.6 |  |
| PX338 |  |  |  | 8.3 |
| Elftex 8 | 5.1 | 4.8 | 5.2 |  |
| Vulcan PF |  |  |  | 4.9 |
| Aerosol OT | .6 |  |  | .6 |
| Cabosil M5 | 1.8 |  | 1.8 |  |
| TS 720 |  |  |  | 1.3 |
| Irganox 1010 | .5 |  | .5 | .6 |
| Butyl Zimate |  |  |  | .6 |
| Kempore 125 E |  |  |  | 1.1 |

A twin screw kneader-extruder was preheated by circulating 275° F oil through the jacket. The ingredients were charged in the order listed except for the last one, the blowing agent. The batch was mixed for 90 minutes, during which time the batch temperature increased to 250° F.

The oil temperature was reduced to 200° F to cool the mix. When the batch temperature reached 220° F, the blowing agent was added, and after a 15 minute mixing time, the fully compounded sealant was discharged into drums and cooled.

| Physical Characteristics : | |
|---|---|
| Viscosity at 300° F | 80,000 cps ± 10,000 cps |
| Specific Gravity | 0.973 |
| Wgt./Gal. | 8.11 |
| Tensile Adhesion | 35 psi |
| Mode of Bond Failure | Sealant/primed glass |
| Hardness "00" Durometer | 20 |
| Foam Specific Gravity | 0.597 |
| % Volume Expansion | 38.6 |
| Foaming Temperature ° F | 330° |

The present invention has been described above, but it will be apparent to those of ordinary skill in the art that many changes and modifications may be made therein without departing from the spirit and scope

6

of the present invention, which is to be determined by reference to the appended claims.

## Claims

1. A window pane mounting arrangement comprising:
a panel defining a window opening having a peripheral flange;
a window pane having a peripheral edge and adapted to be disposed in said window opening with said edge overlapping said flange by a predetermined distance;
said pane having outboard and inboard surfaces;
a first peripheral bead of a room temperature curable adhesive on said inboard surface of said pane within said predetermined distance of said edge, said first bead being deformable prior to cure;
a second peripheral bead of a foamed, elastomeric, hot melt adhesive on said inboard surface of said pane interior of said first bead and within said predetermined distance of said edge;
said first and second beads being configured such that said second bead presents a dam against deformation of said first bead interior of said second bead as said window pane is disposed in said window opening with said inboard surface confronting said flange.

2. An arrangement according to claim 1, wherein said second bead has an upper surface which contacts said flange, as said pane is disposed in said window opening, before said first bead is deformed interior of said second bead.

3. An arrangement according to claim 2, wherein said first bead has an upper surface which extends from said inboard surface of said pane beyond said upper surface of said second bead, said second bead being spaced interior of said first bead by a distance sufficient to accommodate said first bead upon contact with said flange without deformation of said first bead interior of said second bead.

4. An arrangement according to claim 2, wherein said first bead has an upper surface which extends from said inboard surface of said pane beyond said upper surface of said second bead, said first bead having a cross sectional configuration defining a space between said first and second beads sufficient to accommodate said first bead upon contact with said flange without deformation of said first bead interior of said second bead.

5. An arrangement according to claim 1, wherein said foamed hot melt adhesive is tacky upon cooling.

6. An arrangement according to claim 5, wherein said second bead has an upper surface which contacts said flange, as said pane is disposed in said window opening, before said first bead is deformed interior of said second bead.

7. An arrangement according to claim 6, wherein said first bead has an upper surface which extends from said inboard surface of said pane beyond said upper surface of said second bead, said second bead being spaced interior of said first bead by a distance sufficient to accommodate said first bead upon contact with said flange without deformation of said first bead interior of said second bead.

8. An arrangement according to claim 6, wherein said first bead has an upper surface which extends from said inboard surface of said pane beyond said upper surface of said second bead, said first bead having a cross sectional configuration defining a space between said first and second beads sufficient to accommodate said first bead upon contact with said flange without deformation of said first bead interior of said second bead.

9. A method for mounting a window pane in a panel, said method comprising the steps of:
applying a first peripheral bead of a room temperature curable adhesive on an inboard surface of a window pane along a peripheral edge of said pane and within a predetermined distance from said edge, said first bead being deformable prior to cure, and applying a second peripheral bead of a foamed, elastomeric, hot melt adhesive on said inboard surface of said pane along said edge, said second bead being interior of said first bead and within said predetermined distance from said edge;
disposing said pane in a window opening of a panel with said edge overlapping a peripheral flange of said panel by said predetermined distance and with said inboard surface confronting said flange; and
damming said first bead with said second bead against deformation of said first bead interior of said second bead.

10. The method according to claim 9, wherein said hot melt adhesive is adherent upon cooling.

11. The method according to claim 9, wherein said hot melt adhesive comprises at least one polymer and a mineral oil, and a resin, a tackifier or both.

12. The method according to claim 11, which further comprises a plasticizer.

13. The method according to claim 11, which further comprises a surfactant.

14. The method according to claim 11, which further comprises a fumed silica or a thixotrope.

15. The method according to claim 11, which further comprises an antioxidant.

16. The method according to claim 11, which further comprises a product shrinkage reducer, a plasticizer, a surfactant, a fumed silica and an antioxidant.

17. The method according to claim 16, which further comprises a blowing agent.

Fig.1

Fig. 2

Fig. 4

Fig. 3

Fig. 5